# EUROPEAN PATENT SPECIFICATION

(11) **EP 3 711 987 B1**
(45) Date of publication and mention of the grant of the patent: **12.01.2022**
(21) Application number: 20158753.2
(22) Date of filing: 21.02.2020
(51) Int. Cl.: B60J 1/10, B60J 10/70, B60J 10/88, B60J 10/36, B60J 10/18

(54) **A C-PILLAR ASSEMBLY FOR A VEHICLE AND A VEHICLE**
C-SÄULEN-BAUGRUPPE FÜR EIN FAHRZEUG UND EIN FAHRZEUG
MODULE DE C-PILIER POUR UN VÉHICULE ET UN VÉHICULE

(30) Priority: 22.02.2019 CN 201910133175
(43) Date of publication of application: 23.09.2020
(73) Proprietor: PSA Automobiles SA, 78300 Poissy (FR)
(72) Inventor: ZHOU, YING, Shanghai, 200233 (CN); ZHU, YI, Shanghai Caohejing Hi-Tech Park, 200233 (CN); GU, JIAN, Shanghai Caohejing Hi-Tech Park, 200233 (CN); ZHANG, YIN, Shanghai, 200233 (CN); WU, DANG YONG, Shanghai, 200233 (CN); ZHANG, YUCAI, Shanghai, 200233 (CN)

(56) References cited:
- WO-A1-2004/030965
- WO-A1-2007/057766
- US-A- 4 925 237

## Description

### FIELD OF TECHNOLOGY

The present application relates to the technical field of vehicle parts, and specifically to a rear door C-pillar assembly of a vehicle and a vehicle.

### BACKGROUND

Recently, at the position of the rear door fixed window of the C-pillar area of a vehicle, due to the rounded shape of the rear upper corner of the rear door fixed window, the rear end of the glass run channel is easily flipped at the rounded corner position after the glass run channel is installed, which on the one hand affects the fixation of the glass run channel, and on the other hand affects the perceived quality of the vehicle.

A known C-pillar assembly is disclosed in document WO 2007/057766 A1.

### SUMMARY

### (I) Technical problem to be solved

A first objective of the present application is to provide a C-pillar assembly of a vehicle that can improve the fixation of the glass run channel of the rear door fixed window, so as to solve the problem in the prior art that the glass run channel is easily flipped after installation.

A second objective of the present application is to provide a vehicle having a C-pillar assembly of that can improve the fixation of the glass run channel of the rear door fixed window, so as to solve the problem in the prior art that the glass run channel is easily flipped after installation.

### (II) Technical solutions

In order to solve the technical problems above, on the one hand, the present application provides a C-pillar assembly of a vehicle, including a rear door, a rear quarter trim, and a sealing member disposed between the rear door and the rear quarter trim; wherein the rear door includes a rear door fixed window connected to a rear door inner panel and a rear door frame, and a glass run channel connected to the rear door fixed window; wherein the rear door fixed window includes an encapsulation, an inner side of which being connected with the rear door frame; a rear door fixed window glass fixed to an outer side of the encapsulation; and an insert, at least partially inserted in the encapsulation and connected to the glass run channel to connect the glass run channel with the rear door fixed window.

According to the invention, the insert includes a first portion extending out from the encapsulation to connect with the glass run channel; and a second portion inserted in the encapsulation.

According to an embodiment, the encapsulation includes: a support portion, and an outer side of which being connected to the rear door fixed window glass; an extension portion extending upward from the support portion on an upper side of the rear door fixed window so as to connect with the glass run channel; and an arm extending inward from the support portion to seal with the rear door frame and the rear door inner panel.

According to an embodiment, the encapsulation is connected to the rear door frame through a clip.

According to an embodiment, one end of the clip is fixed on the encapsulation, and the other end of the clip is fixed on the rear door frame, such that the rear door fixed window is connected to the rear door frame through the clip.

According to an embodiment, the sealing member is disposed on the rear quarter trim; and the sealing member contacts with the encapsulation to form a seal between the rear door and the rear quarter trim when the rear door is closed.

According to an embodiment, the insert is at least partially inserted in the encapsulation by injection molding.

According to an embodiment, the insert is at least partially inserted in the encapsulation at a rear upper corner position of the rear door.

According to an embodiment, the sealing member is formed by a bubble tube and is circular.

On the other hand, the present application further provides a vehicle having the C-pillar assembly of a vehicle described above.

### (III) Advantageous effects

The technical solutions above of the present application have the following merits:

The present application on the one hand provides a C-pillar assembly of a vehicle, including a rear door, a rear quarter trim, and a sealing member disposed between the rear door and the rear quarter trim; wherein the rear door includes a rear door fixed window connected to a rear door inner panel and a rear door frame, and a glass run channel connected to the rear door fixed window; wherein the rear door fixed window includes an encapsulation, an inner side of which being connected with the rear door frame; a rear door fixed window glass fixed to an outer side of the encapsulation; and an insert, at least partially inserted in the encapsulation and connected to the glass run channel to connect the glass run channel with the rear door fixed window. Therefore, by arranging the encapsulation in which the insert is at least partially inserted on the rear door fixed window, and fixing the glass run channel through the insert, the C-pillar assembly on the one hand can prevent the rear end of the glass run channel from being flipped at the rounded corner of the rear door fixed window, and the glass run channel can be connected in the Y-direction to better fix the glass run channel so as to ensure good perceived quality. By connecting the glass run channel and the encapsulation through the insert, the glass run channel and the encapsulation have a plurality of sealing points, the C-pillar assembly on the other hand further improves the NVH performance.

### BRIEF DESCRIPTION OF THE DRAWINGS

FIG.1 is a schematic diagram of the C-pillar assembly in the prior art;
FIG.2 is a cross-sectional view of A-A of FIG.1;
FIG.3 is a schematic diagram of the C-pillar assembly according to an embodiment of the present application;
FIG.4 is a cross-sectional view of B-B of FIG.3;
FIG.5 is a cross-sectional view of C-C of FIG.3;
FIG.6A and FIG.6B are schematic diagrams of the insert;
FIG.7 to FIG.9 are schematic diagram illustrating the effect;
FIG.10 is a schematic diagram illustrating the position of the clip;
FIG.11 is a schematic diagram illustrating the assembling process of the C-pillar assembly.

Wherein, 10, sealing member; 20, glass run channel; 30, rear quarter window; 40, rear door fixed window; 50, rear door frame; 60, door sealing member; 70, rear door inner panel; 100, rear door; 200, rear quarter trim; 300, sealing member; 110, rear door fixed window; 120, glass run channel; 131, rear door frame; 132 rear door inner panel; 111, encapsulation; 112, insert; 113, rear door fixed window glass; 400, side wall; 500, clip; 1111, support portion; 1112, extension portion; 1113, arm; 1121, first portion; 1122, second portion; 810, support portion panel; 820, extension portion panel; 830, stepped portion panel; 840, reinforcing rib; 910, clipping structure; 510, fixed end; 520, clipping end.

### DETAILED DESCRIPTION

In order to make the objectives, technical solutions, and advantages of the embodiments of the present application clearer, the technical solutions of the embodiments of the present application will be clearly and completely described with reference to the accompanying drawings of the embodiments of the present application. Obviously, the described embodiments are part but not all of the embodiments of the present application. Based on the embodiments of the present application, all other embodiments obtained by a person of ordinary skill in the art without creative efforts shall fall within the protection scope of the present application.

In the prior art, in order to seal the gap between the rear quarter window and the rear door fixed window, a sealing member is usually provided on the rear door. When the rear door is closed, the sealing member provided on the rear door contacts with the rear quarter window and is extruded between the rear quarter window and the rear door fixed window, thereby forming a seal.

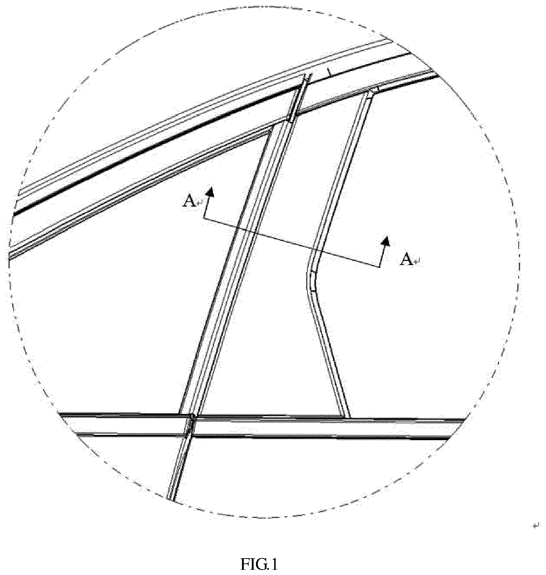

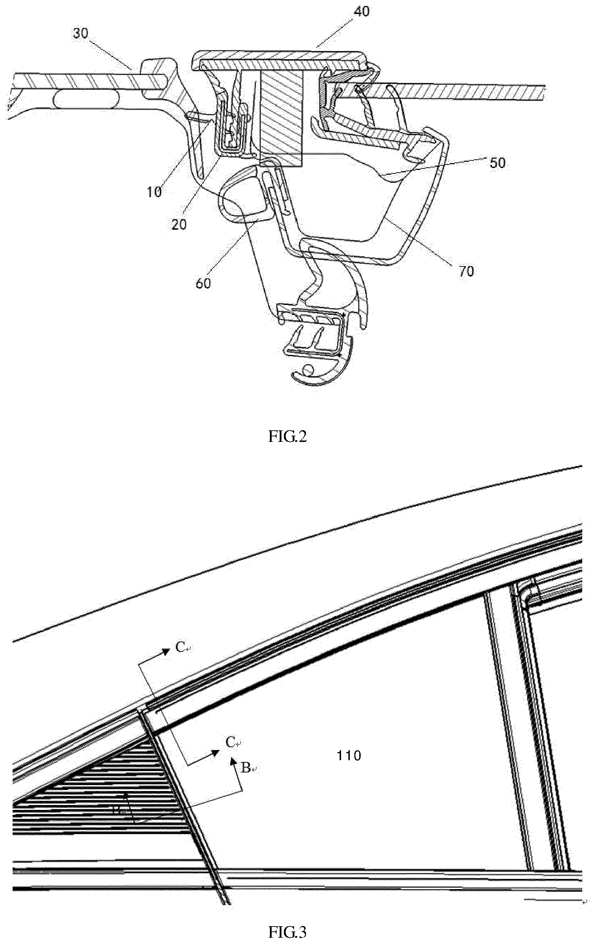

FIG.1 is a schematic diagram of an appearance structure of the rear quarter window and the rear door fixed window according to the prior art; FIG.2 is a cross-sectional view along A-A of FIG.1.

In the prior art, as shown in FIG.2, the sealing member 10 is usually a simple lip extruded profile, which is relatively soft and can be extruded. When the rear door is opened, the sealing member 10 is away from the rear quarter window 30 as the rear door is opened. When the rear door is closed, the sealing member 10 contacts with the rear quarter window 30 as the rear door is closed, and is extruded between the rear quarter window 30 and the rear door fixed window 40 to form a single-layer seal between the rear quarter window 30 and the rear door fixed window 40, but the sealing performance is poor. And as shown in FIG.2, when the sealing member 10 is connected to the glass run channel 20, it needs to be installed upward from the lower side due to the U-shaped structure of the sealing member 10, while a door sealing member 60 is right located on the lower side, which restricts the installation path of the sealing member 10 so that it is not convenient to install the sealing member 10.

In addition, when sealing by the above-mentioned sealing method, the rear end of the glass run channel 20 is easily flipped at the rounded corner of the rear upper corner of the rear door fixed window 40. Therefore, the fixing performance of the glass run channel 20 is poor and affects the perceived quality of the vehicle.

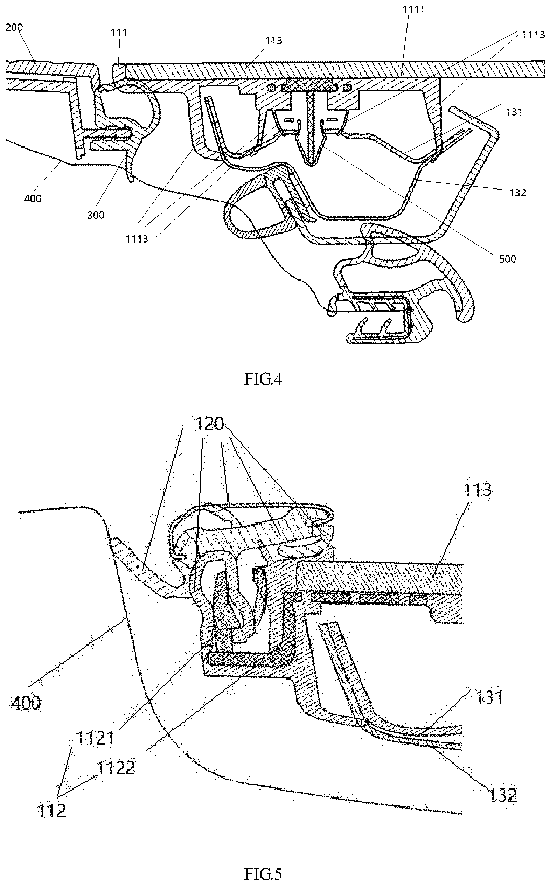

FIG.3 is a schematic diagram of the C-pillar assembly according to an embodiment of the present application; FIG.4 is a cross-sectional view of B-B in FIG.3; FIG.5 is a cross-sectional view of C-C in FIG.3; the detailed description is made hereinafter with reference to FIG.3 to FIG.5.

As shown in FIG.3, the C-pillar assembly includes a rear door 100 and a rear quarter trim 200, and a sealing member 300 is provided between the rear door 100 and the rear quarter trim 200 to seal the rear door 100 and the rear quarter trim 200. Wherein, the sealing member 300 is a soft material. When the rear door 100 is closed, the sealing member 300 between the rear door 100 and the rear quarter trim 200 is extruded between the rear door 100 and the rear quarter trim 200 due to the collision and contact between the rear door 100 and the rear quarter trim 200, so that a seal is formed between the rear door 100 and the rear quarter trim 200, thereby sealing a gap between the rear door 100 and the rear quarter trim 200 to prevent interior noise of the vehicle.

The rear door 100 includes a rear door frame 131 and a rear door inner panel 132. Wherein, the rear door inner panel 132 is disposed on an inner side of the rear door frame 131. The rear door 100 further includes a rear door fixed window 110 connected to the rear door frame 131 and the rear door inner panel 132 and a glass run channel 120 connected to the rear door fixed window 110. The rear door frame 131, the rear door inner panel 132, the rear door fixed window 110, and the glass run channel 120 are assembled to form the rear door 100.

As shown in FIG.4 and FIG.5, the rear door fixed window 110 includes an encapsulation 111, a rear door fixed window glass 113, and an insert 112. Wherein, the encapsulation 111 is in a coating shape and coats the rear door fixed window glass 113. Specifically, a part of the encapsulation 111 is supported on an inner side of the rear door fixed window glass 113, and the other part coats an edge of the rear door fixed window glass 113. That is, the rear door fixed window glass 113 is on an outer side of the encapsulation 111. The insert 112 is at least partially inserted in the encapsulation 111. The part of the insert 112 inserted in the encapsulation 111 is configured to be fixedly connected to the encapsulation 111, and the other part of the insert 112 protruding from the encapsulation 111 is configured to be connected to the glass run channel 120, so that the glass run channel 120 is connected to the encapsulation 111 through the insert 112. When the glass run channel 120 is connected to the encapsulation 111 through the insert 112, since the rear door fixed window glass 113 is also fixed on the encapsulation 111, the cooperative connection between the glass run channel 120 and the rear door fixed window glass 113 is achieved, as shown in FIG.5.

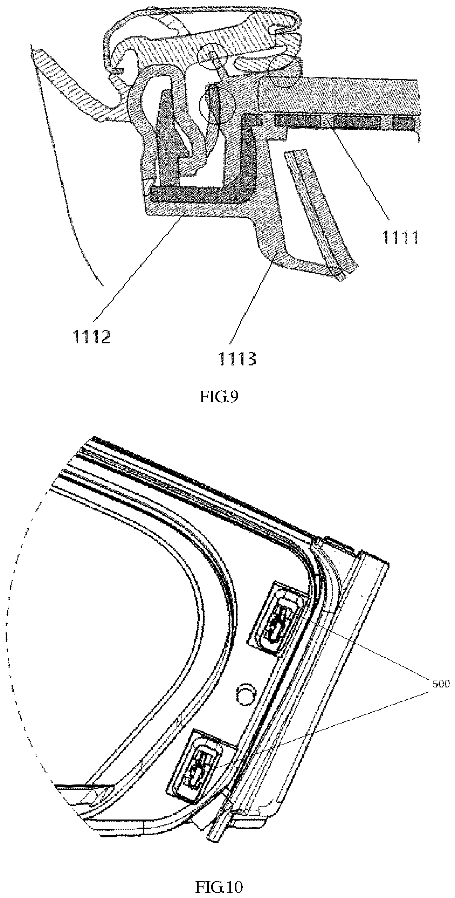

According to an embodiment, the encapsulation 111 includes a support portion 1111, an extension portion 1112, and an arm 1113. Wherein, the support portion 1111 is configured to support and coat the rear door fixed window glass 113 as described above. Specifically, a part of the support portion 1111 is configured to be supported on the inner side of the rear door fixed window 113, and the other part is configured to coat the edge of the rear door fixed window glass 113. As shown in FIG.5, the extension portion 1112 is on the upper side of the rear door fixed window 110 and is configured to be connected to the glass run channel 120. More specifically, on the upper side of the rear door fixed window 110, the extension portion 1112 is parallel to the support portion 1111 and is on the inner side of the support portion 1111, that is, the extension portion 1112 and the support portion 1111 form a step shape, such that the glass run channel 120 is fixedly connected at the formed step; the arm 1113 extend from the support portion 1111 into the vehicle to contact with the rear door inner panel 131, and the arm 1113 may extend from the support portion 1111 into the vehicle to form a lip structure, which can prevent the rear door inner panel 132 from being exposed through a closer contact with the rear door inner panel 132, thereby improving the perceived quality of the vehicle. Further, the support portion 1111, the extension portion 1112, and the arm 1113 are integrally formed. Moreover, the encapsulation 111 may include a plurality of arms 1113 to further improve the perceived quality of the vehicle. In addition, at the rear side of the rear door fixed window 110, since the glass run channel 120 does not need to be connected, the encapsulation 111 includes a support portion 1111 and a plurality of arms 1113 on the rear side of the rear door fixed window 110, as shown in FIG.4 and FIG.9.

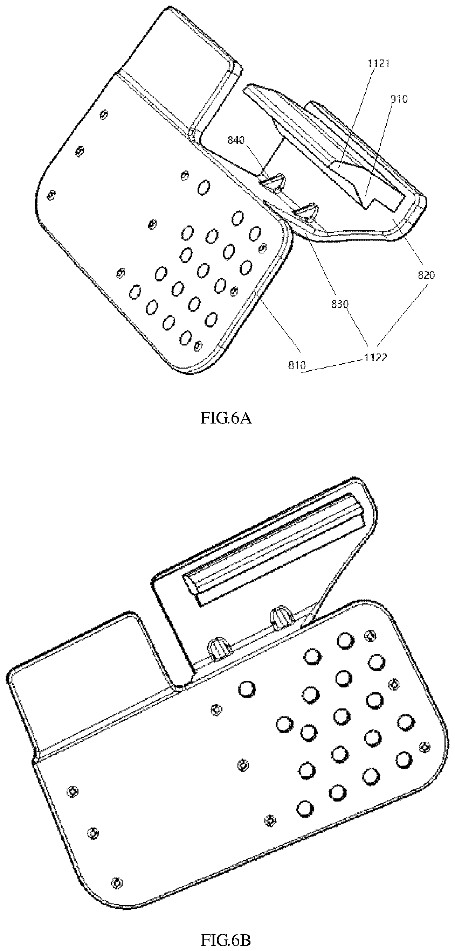

Referring to FIG.5 to FIG.6B, the insert 112 includes a first portion 1121 protruding from the encapsulation 111 to connect with the glass run channel 120 and a second portion 1122 inserted in the encapsulation 111. Wherein, as shown in FIG.5, the encapsulation 111 includes a support portion 1111 and an extension portion 1112. As described above, the support portion 1111 and the extension portion 1112 are parallel to each other and are in a stepped shape. Therefore, in order to be inserted in the encapsulation 111, a structure of the second portion 1122 includes a support portion panel 810, an extension portion panel 820, and a stepped portion panel 830. Therefore, the support portion panel 810 and the extension portion panel 820 are parallel to each other, and the extension portion panel 820 is closer to the inner side of the vehicle than the support portion panel 810, and the stepped portion panel 830 is perpendicular to the support portion panel 810 and the extension portion panel 820 and is disposed between the support portion panel 810 and the extension portion panel 820. As such, the second portion 1122 can match the shape of the encapsulation so as to be inserted in the encapsulation 111. The first portion 1121 is perpendicular to the extension portion panel 820 and extends outward from the extension portion panel 820, so as to be fixedly connected to the glass run channel 120. Specifically, a clipping structure 910 is provided on the first portion 1121, and the clipping structure 910 can be clipped on the edge of the glass run channel 120 so as to be fixedly connected to the glass run channel 120. In addition, a guide structure may be provided at an end portion of the first portion 1121 so as to be more quickly and conveniently inserted in the groove of the glass run channel 120. Specifically, the guide structure may be an oblique plane. Specifically, a plurality of reinforcing ribs 840 are obliquely provided at a perpendicular connection between the support portion panel 810 and the stepped portion panel 830 to reinforce the connection strength between the support portion panel 810 and the stepped portion panel 830. Specifically, the width of the stepped portion panel 830 gradually increases from the end close to the support portion panel 810 to the end close to the extension portion panel 820, and the width of the extension portion 820 gradually increases from the end close to the stepped portion panel 830 to the end away from the stepped portion panel 830. Wherein, the first portion 1121 is disposed at the end away from the stepped portion panel 830. On one edge of the support portion panel 810, the edge portion is connected to the stepped portion panel 830, and the other portion continues to extend outward, that is, extending in the direction toward to the first portion 1121. Such structure of the insert 112 on the one hand can reinforce the inserting strength of the insert 112 in the encapsulation 111, and on the other hand can reinforce the connection strength with the glass run channel 120. According to an embodiment, the insert 112 may be a plastic material, and may be inserted in the encapsulation 111 through injection molding technology during the manufacturing process of the encapsulation 111. The insert 112 is at least partially inserted in the encapsulation 111 at the rear upper corner of the rear door 100 to fix the glass run channel 120 at the rounded corner so as to prevent the glass run channel 120 here from being flipped after installation. The first portion 1121 and the second portion 1122 of the insert 112 can be integrally formed; the support portion panel 810, the extension portion panel 820, and the stepped portion panel 830 can be integrally formed.

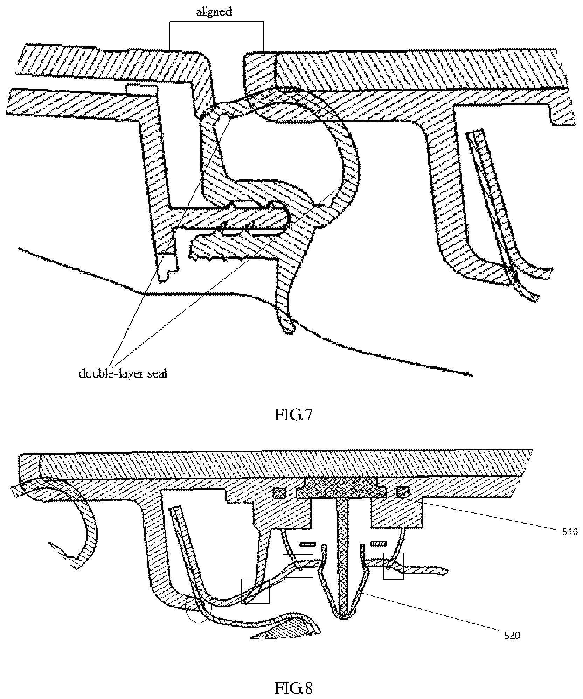

The inner side of the encapsulation 111 is connected to the rear door frame 131. Specifically, the encapsulation 111 is connected to the rear door frame 131 through a clip 500. As shown in FIG.4 and FIG.8, the structure of the clip 500 includes a fixed end 510 and a clipping end 520. The fixed end 510 is fixed on the encapsulation 111 and the clipping end 520 is fixed on the rear door frame 131 to connect the encapsulation 111 to the rear door frame 131. Specifically, a plurality of the clip 500 may be provided to increase the connection strength between the encapsulation 111 and the rear door frame 131. According to an embodiment, as shown in FIG.10, two clips 500 may be provided, and the connecting line of the two clips 500 may be parallel to the edge of the back door 100, and the two clips 500 are spaced apart from each other by an appropriate distance to provide a uniform and strong bonding force between the encapsulation 111 and the rear door frame 131.

The sealing member 300 between the rear quarter trim 200 and the rear door 100 is disposed on the rear quarter trim 200 and protrudes from the rear quarter trim 200. When the rear door 100 is closed, the sealing member 300 is extruded between the rear quarter trim 200 and the rear door 100, and in contact with the encapsulation 111 of the rear door 100. Since the sealing member 300 and the encapsulation 111 are soft materials, the extrusion between the rear door 100 and the rear quarter trim 200 can achieve a better seal. Specifically, the sealing member 300 may be an extruded bubble tube structure and has a circular shape, and may form a double-layer seal after being extruded. Specifically, as shown in FIG.4, the sealing member 300 may be disposed on a trim bracket of the rear quarter trim 200.

As shown in FIG.7, in the C-pillar assembly according to an embodiment, the rear quarter trim 200 and the rear door fixed window 110 can be aligned, thereby preventing a step from being generated between the rear quarter trim 200 and the rear door fixed window 110, which is beneficial for the noise immunity of the vehicle. The sealing member 300 can create a double seal between the rear quarter trim 200 and the rear door 100, thereby preventing a cavity between the rear quarter trim 200 and the rear door 100 to increase the NVH performance.

As shown in FIG.8, a plurality of arms 1113 are provided on the encapsulation 111, and a part of the arms 1113 are configured to seal with the rear door frame 131 (as shown by the blocks in the figure), so that the use of foam can be avoided to reduce the costs; and a part of the arms 1113 are configured to seal with the rear door inner panel 132 (as shown by the circle in the figure) to improve the perceived quality and NVH performance of the vehicle.

As shown in FIG.9, when the glass run channel 120 is connected to the encapsulation 111 through the insert 112, there are multiple sealing points between the glass run channel 120 and the encapsulation 111 (as shown by the circles in the figure) to improve the NVH performance of the vehicle. A rubber molded part is provided on a bracket of the glass run channel 120 to seal with the encapsulation 111 to increase the perceived quality.

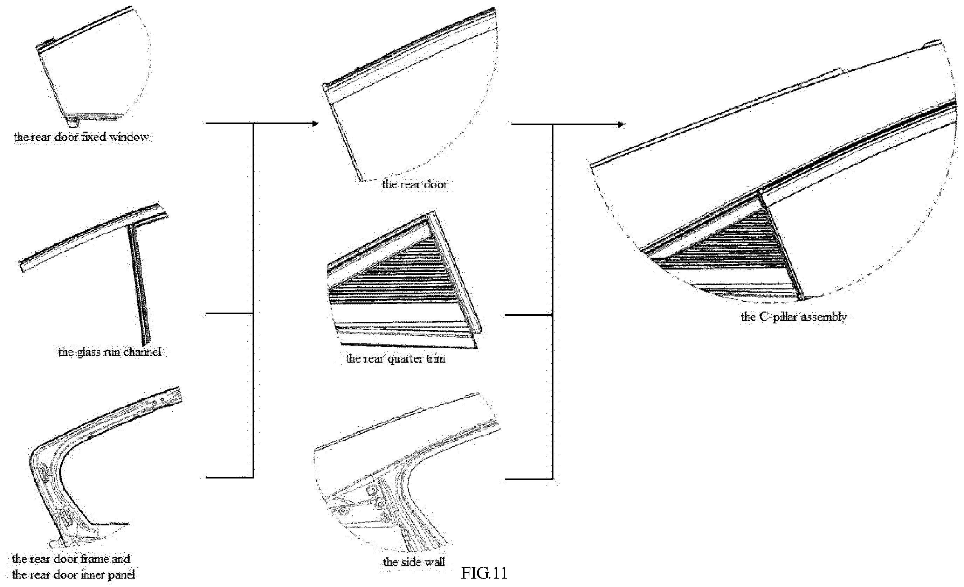

Hereinafter, the manufacturing process of the C-pillar assembly according to an embodiment of the present application will be described with reference to FIG. 11. Firstly, the encapsulation 111 that has been inserted with the insert 112 is connected to the rear door fixed window glass 113, and the clip 500 is installed on the encapsulation 111 to form the rear door fixed window 110. Next, the rear door fixed window 110 is installed with the glass run channel 120, the rear door frame 131 and the rear door inner panel 132; specifically, the rear door frame 131 is installed on the clip 500, and the glass run channel 120 is installed on the insert 112 inserted in the encapsulation 111 to form the rear door 100. Then, the rear quarter trim 200 is installed on the side wall, and then assembled with the rear door 100 to form the C-pillar assembly.

Another aspect of the present application provides a vehicle having the C-pillar assembly described above.

In summary, the present application provides a C-pillar assembly of a vehicle, including a rear door, a rear quarter trim, and a sealing member disposed between the rear door and the rear quarter trim; wherein the rear door includes a rear door fixed window connected to a rear door inner panel and a rear door frame, and a glass run channel connected to the rear door fixed window; wherein the rear door fixed window includes an encapsulation, an inner side of which being connected with the rear door frame; a rear door fixed window glass fixed to an outer side of the encapsulation; and an insert, at least partially inserted in the encapsulation and connected to the glass run channel to connect the glass run channel with the rear door fixed window. Therefore, by arranging the encapsulation in which the insert is at least partially inserted on the rear door fixed window, and fixing the glass run channel through the insert, the C-pillar assembly on the one hand can prevent the rear end of the glass run channel from being flipped at the rounded corner of the rear door fixed window, and the glass run channel can be connected in the Y-direction to better fix the glass run channel so as to ensure good perceived quality. By connecting the glass run channel and the encapsulation through the insert, the glass run channel and the encapsulation have a plurality of sealing points, the C-pillar assembly on the other hand further improves the NVH performance.

## Claims

1. A C-pillar assembly for a vehicle, comprising a rear door, a rear quarter trim (200), and a sealing member (300) disposed between the rear door and the rear quarter trim, wherein, the rear door comprises a rear door fixed window connected to a rear door inner panel (132) and a rear door frame (131), and a glass run channel (120) connected to the rear door fixed window, wherein, the rear door fixed window comprises:
an encapsulation (111), an inner side of which being connected with the rear door frame (131);
a rear door fixed window glass (113), fixed to an outer side of the encapsulation;
**characterized in that** it further comprises an insert (112), at least partially inserted in the encapsulation (111) and connected to the glass run channel (120) to connect the glass run channel with the rear door fixed window (113) and **in that** the insert (112) comprises: a first portion (1121) extending out from the encapsulation to connect with the glass run channel, and a second portion (1122) inserted in the encapsulation.

2. The C-pillar assembly for a vehicle according to claim 1, **characterized in that**, the encapsulation comprises:
a support portion, an outer side of which being connected to the rear door fixed window glass;
an extension portion extending upward from the support portion on an upper side of the rear door fixed window so as to connect with the glass run channel; and
an arm extending inward from the support portion to seal with the rear door frame and the rear door inner panel.

3. The C-pillar assembly for a vehicle according to claim 2, **characterized in that**, the encapsulation is connected to the rear door frame through a clip.

4. The C-pillar assembly for a vehicle according to claim 3, **characterized in that**, one end of the clip is fixed on the encapsulation, and the other end of the clip is fixed on the rear door frame, such that the rear door fixed window is connected to the rear door frame through the clip.

5. The C-pillar assembly for a vehicle according to claim 4, **characterized in that**,
the sealing member is disposed on the rear quarter trim; and
the sealing member contacts with the encapsulation to form a seal between the rear door and the rear quarter trim when the rear door is closed.

6. The C-pillar assembly for a vehicle according to claim 5, **characterized in that**, the insert is at least partially inserted in the encapsulation by injection molding.

7. The C-pillar assembly for a vehicle according to claim 6, **characterized in that**, the insert is at least partially inserted in the encapsulation at a rear upper corner position of the rear door.

8. The C-pillar assembly for a vehicle according to claim 7, **characterized in that**, the sealing member is formed by a bubble tube and is circular.

9. A vehicle, **characterized in** comprising the C-pillar assembly for a vehicle according to any of claims 1-8.

## Patentansprüche

1. C-Säulenanordnung für ein Fahrzeug, umfassend eine Hecktür, eine Heckviertelverkleidung (200) und ein Dichtungselement (300), das zwischen der Hecktür und der Heckviertelverkleidung angeordnet ist, wobei die Hecktür umfasst ein festes Hecktürfenster, das mit einer Innenverkleidung (132) der Hecktür und einem hinteren Türrahmen (131) verbunden ist, und einen Glaslaufkanal (120), der mit dem festen Hecktürfenster verbunden ist, wobei das Hecktürfestfenster umfasst:
eine Kapselung (111), deren Innenseite mit dem hinteren Türrahmen (131) verbunden ist;
eine an der Außenseite der Kapselung befestigte Hecktür-Fensterscheibe (113);
**dadurch gekennzeichnet, dass** sie ferner einen Einsatz (112) umfasst, der zumindest teilweise in die Kapselung (111) eingesetzt und mit dem Glaslaufkanal (120) verbunden ist, um den Glaslaufkanal mit dem festen Fenster (113) der hinteren Tür zu verbinden, und dass der Einsatz (112) umfasst: einem ersten Abschnitt (1121), der sich von der Kapselung aus erstreckt und mit dem Glaslaufkanal verbunden ist, und einem zweiten Abschnitt (1122), der in die Kapselung eingesetzt ist.

2. C-Säulenanordnung für ein Fahrzeug nach Anspruch 1, **dadurch gekennzeichnet, dass** die Kapselung umfasst:
einem Trägerteil, dessen Außenseite mit der Hecktürscheibe verbunden ist;
einen Verlängerungsabschnitt, der sich von dem Halteabschnitt an der Oberseite der festen Hecktür nach oben erstreckt, um mit dem Glaslaufkanal verbunden zu werden; und
einen Arm, der sich vom Stützteil nach innen erstreckt und mit dem hinteren Türrahmen und der hinteren Türinnenverkleidung abdichtet.

3. C-Säulenanordnung für ein Fahrzeug nach Anspruch 2, **dadurch gekennzeichnet, dass** die Verkapselung mit dem hinteren Türrahmen durch eine Klammer verbunden ist.

4. C-Säulenanordnung für ein Fahrzeug nach Anspruch 3, **dadurch gekennzeichnet, dass** ein Ende der Klammer an der Verkapselung und das andere Ende der Klammer an dem hinteren Türrahmen derart befestigt ist, dass das feste Fenster der hinteren Tür mit dem hinteren Türrahmen durch die Klammer verbunden ist.

5. C-Säulenanordnung für ein Fahrzeug nach Anspruch 4, **dadurch gekennzeichnet, dass**
das Dichtungselement ist an der hinteren Viertelverkleidung angeordnet; und
das Dichtungselement berührt die Verkapselung, um bei geschlossener Hecktür eine Abdichtung zwischen der Hecktür und der Heckverkleidung zu bilden.

6. C-Säulenanordnung für ein Fahrzeug nach Anspruch 5, **dadurch gekennzeichnet, dass** der Einsatz zumindest teilweise in die Kapselung durch Spritzgießen eingesetzt ist.

7. C-Säulenanordnung für ein Fahrzeug nach Anspruch 6, **dadurch gekennzeichnet, dass** der Einsatz zumindest teilweise in die Kapselung an einer hinteren oberen Eckposition der hinteren Tür eingesetzt ist.

8. C-Säulenanordnung für ein Fahrzeug nach Anspruch 7, **dadurch gekennzeichnet, dass** das Dichtungselement durch ein Blasenrohr gebildet ist und kreisförmig ist.

9. Fahrzeug, **dadurch gekennzeichnet, dass** es die C-Säulenanordnung für ein Fahrzeug nach einem der Ansprüche 1 bis 8 umfasst.

## Revendications

1. Ensemble de pilier en C pour un véhicule, comprenant une porte arrière, un garnissage de quart arrière (200) et un joint d'étanchéité (300) disposé entre la porte arrière et le garnissage de quart arrière, dans lequel,
la porte arrière comprend une fenêtre fixe de porte arrière connectée à un panneau interne de porte arrière (132), un cadre de porte arrière (131), et un canal de passage de vitre (120) connecté à la fenêtre fixe de porte arrière, dans lequel la vitre fixe de porte arrière comprend :
un élément d'encapsulation (111) dont une face interne est reliée au cadre de porte arrière (131);
une vitre de fenêtre (113) fixe de porte arrière, fixée à un côté extérieur de l'encapsulation ; **caractérisé en ce qu'**il comprend en outre un insert (112), au moins partiellement inséré dans l'encapsulation (111) et relié au canal de passage de vitre (120) pour relier le canal de passage de vitre à la fenêtre fixe de porte arrière (113), et **en ce que** l'insert (112) comprend : une première partie (1121) s'étendant hors de l'encapsulation pour se connecter au canal de passage de vitre, et une seconde partie (1122) insérée dans l'encapsulation.

2. Ensemble de pilier C pour un véhicule selon la revendication 1, **caractérisé en ce que** l'encapsulation comprend :
une partie de support dont une face extérieure est reliée à la vitre fixe de la porte arrière ;
une partie d'extension s'étendant vers le haut à partir de la partie de support sur un côté supérieur de la fenêtre fixe de la porte arrière de manière à se raccorder au canal de passage de vitre ; et
un bras s'étendant vers l'intérieur à partir de la partie de support pour assurer l'étanchéité avec le cadre de porte arrière et le panneau interne de porte arrière.

3. Ensemble de montant en C pour un véhicule selon la revendication 2, **caractérisé en ce que** l'encapsulation est reliée au cadre de porte arrière par une agrafe.

4. Ensemble de montant en C pour un véhicule selon la revendication 3, **caractérisé en ce qu'**une extrémité de l'agrafe est fixée sur l'encapsulation et l'autre extrémité de l'agrafe est fixée sur le cadre de porte arrière, de sorte que la fenêtre fixe de porte arrière est reliée au cadre de porte arrière par l'intermédiaire de l'agrafe.

5. Ensemble de montant C pour un véhicule selon la revendication 4, **caractérisé en ce que** :
l'élément d'étanchéité est disposé sur la garnissage du quart arrière ; et
l'élément d'étanchéité est en contact avec l'encapsulation pour former un joint entre la porte arrière et la garnissage de quart arrière lorsque la porte arrière est fermée.

6. Ensemble de montant en C pour un véhicule selon la revendication 5, **caractérisé en ce que** l'insert est au moins partiellement inséré dans l'encapsulation par moulage par injection.

7. Ensemble de montant en C pour un véhicule selon la revendication 6, **caractérisé en ce que** l'insert est au moins partiellement inséré dans l'encapsulation à une position d'angle supérieur arrière de la porte arrière.

8. Ensemble de montant en C pour un véhicule selon la revendication 7, **caractérisé en ce que** l'élément d'étanchéité est formé par un cordon de matériau extrudé et est circulaire.

9. Véhicule, **caractérisé en ce qu'**il comprend l'ensemble de montant C pour un véhicule selon l'une quelconque des revendications 1 à 8.
